# EUROPEAN PATENT APPLICATION

(11) **EP 1 102 159 A2**
(43) Date of publication of application: **23.05.2001**
(21) Application number: 00850193.4
(22) Date of filing: 15.11.2000
(51) Int. Cl.: G06F 3/12

(54) **Printer with web based input and control interface**

(30) Priority: 15.11.1999 SE 9904131
(71) Applicant: INTERMEC IP CORP., Woodland Hills, California 91367-7418 (US)
(72) Inventor: Dahlberg, Martin, 417 18 Göteborg (SE)
(74) Representative: Akerman, Marten Lennart

(57) **Abstract**

A printer comprising a network server adapted for communicating with a printer client by means of a packet switching data communications protocol. The printer is provided with a web server adapted to present an input interface for inputting printing information and control data via static HTML-pages, and for presenting printer status information by means of dynamically generated HTML-pages.

## Description

The present invention relates generally to a printer and a remote control system for a printer via a data communications interface, and more specifically to such a printer and system devised to communicate in a packet switching data communications network.

### Background

When controlling a printer by means of a computer in accordance with the general state of the art an application program is required for the compilation of printing information, i.e. such information that is to be print out on a paper, a label, a tag or any other information carrier. In order to be able to communicate this printing information and control information to the printer it is required that a printer driver which is specific to the printer is installed in the computer. Such drivers are platform dependent in the sense that they have to be adapted to the operating system of each computer. In connection with the increasing computerization and remote control of printers the technical as well as the cost related drawbacks of such printer and application platform dependent drivers have been emphasized.

### Prior Art

The Patent Abstract of Japan No.11265273 A shows an example of a printer being capable of extracting printing information from an HTML-document. However, there is no indication of if or how the printer is controlled in a platform independent manner.

### The Object of the Invention

The overall object of the invention is to solve the problem of providing a printer and a system for controlling a printer, which are independent of the technical platform and the operating systems of computers for the compilation of printing information or for controlling printers to print out such information. An aspect of the object is to provide an apparatus and a method for controlling printers from computer such as a PC, a workstation or a network terminal without requiring a driver specific to the printer being installed in the computers. Another aspect of the problem is to provide functionality for transmitting computer program software for executing in the printer, for example control software.

### Summary of the invention

The object is achieved in accordance with the invention by providing the printer with functionality for two-way communication of data according to platform independent communication protocols. A platform is in this document understood to be a technical platform for computers with respect to technology or operating system. In an advantageous embodiment of the invention a client/server communication based on HTTP in conjunction with CGI (e.g. CGI/1.0) is used as a framework for a print protocol. It is thereby made possible to compile and transfer printout data from standard application programs for network communication, for example internet browsers such as Netscape Navigator or Microsoft Explores, and in connection therewith also to transfer control parameters based on the CGI.

In accordance with an aspect of the invention, the printer is provided with a network interface devised for communication with a data communications network and a network server devised for communication according to a packet switching data communications protocol. In one embodiment of the invention the printer is provided with hardware in the shape of a network circuit for communicating with a TCP/IP based network such as a LAN, a WAN or the INTERNET and a web server for communicating HTTP-packets and SNMP-packets. A user can with this embodiment through his web browser read a HTML-page that is generated by the printer and comprises an input interface devised for inputting printing information or control information. The inquiring client, i.e. the application program (e.g. Netscape or Explorer), expects a response to its query to the printer. In accordance with an advantageous embodiment the printer is adapted to generate an HTML-page to show status messages and possibly also to create a new instance of the input interface again in the shape of an HTML-page with one or more input fields for printing information or control information. The input interface may also comprise command buttons, for example being adapted to generate commands for transmitting information to the printer or for requesting a print out. Different types of information, e.g. text, images or control information, can thereby in a simple manner be transmitted to the printer.

A further developed embodiment of the invention is arranged such that printing information can be retrieved from a separate or independent database. In one embodiment conveniently arranged such that a database search is performed by means of a web database page, whereupon a completed search the search result is transmitted to the printer for a print out.

In still further developments of the invention it is arranged that computer program code for execution in the printer can be input and transmitted via an HTML-based input interface similar to the above described interface. This feature is specifically useful for example when updating the control software of the printer or for temporary reconfiguring the printer for specific purposes

### Brief Description of the Drawings

The invention will be further explained below with reference to the enclosed drawings, in which:
Fig 1 schematically shows an overview of the inventive printer connected to a data communications network;
Fig 2 shows a schematic block diagram of functional components in an embodiment of the inventive printer;
Fig 3A shows an example of a HTML-page adapted as an input interface for inputting printing information; and
Fig 3B shows an example of a dynamically generated HTML-page adapted for transmitting status information in response to a commanded print out.

### Detailed Description of a Preferred Embodiment

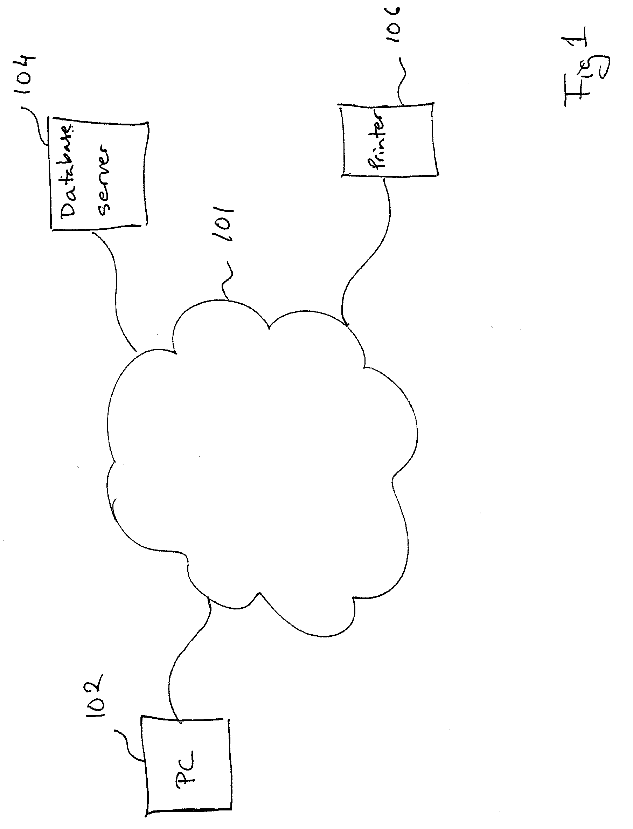

Fig 1 shows an embodiment of the inventive system and more specifically a computer 102, such as a PC, a work station or a network terminal running or presenting a user application program and being connected to a data communications network 101, e.g. a LAN, a WAN, Intranet or Internet. The computer 102 is preferably provided with a user application program for example in the shape of a web browser such as Microsoft Explorer or Netscape. A printer 106 arranged in accordance with the invention for printing for example text and images or labels with bar codes, text or graphics is connected to the network 101. In Fig 1, a separate database server 104 is also connected to the network 101. In the exemplifying embodiment the network is a packet switching network that communicates by means of the TCP/IP and is preferably a part of the internet.

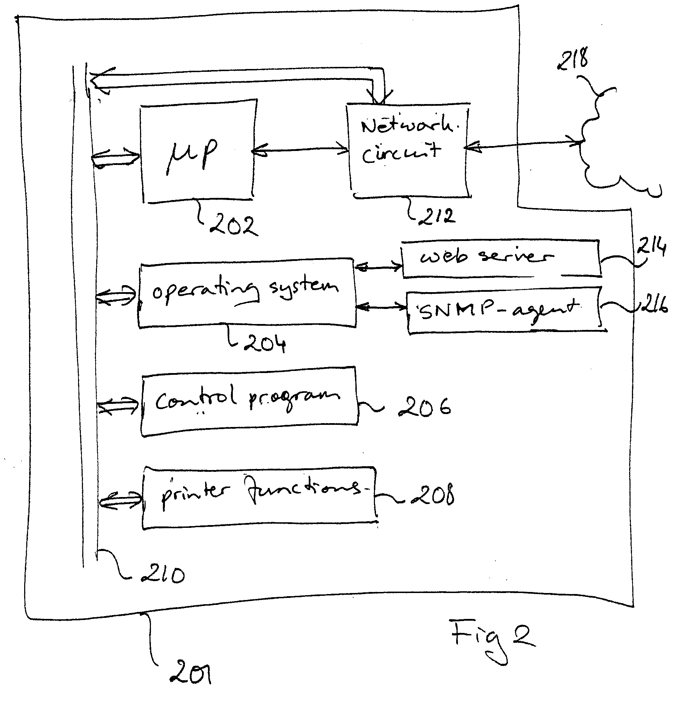

Fig 2 shows an embodiment of a printer 201 in accordance with the invention and comprising a microprocessor (µP) 202 devised for controlling printer functions. In order to achieve an overview the hardware and software components are drawn as separate but communicatively coupled functional blocks. The printer thus comprises an operating system 204 and a control program 206 for controlling different printer functions such as printing or paper feed, the printer functions being gathered in block 208 for the sake of simplicity. The printer can be of a conventional office printer type for printing on paper as the information carrier, or a special printer type such as a label printer or a printer for other types of information carriers. The different components are communicatively coupled via program parameter or variable communication or by signal communication, which in Fig 2 is illustrated as communication via a communications channel 210. The printer further comprises a network circuit 212 including a processor adapted for communication with a data communications network 218 corresponding to the network 101 of Fig 1. The network circuit itself comprises a hardware protocol as well as a software protocol for packet transmission via the data communications network. The operating system comprises or is coupled to a webserver 214 for receiving and sending, respectively, HTTP-packets and possibly also an SNMP-agent 216 for receiving and sending SNMP-packets.

The webserver 214 is adapted to manage routines in the operating system in accordance with a CGI-protocol, herein called kernel CGI, to store predefined static HTML-pages e.g. for providing an input interface, to generate IPP-pages and to generate dynamic HTML-pages for transmitting and presenting status information. The web server functionality as well as the SNMP-server functionality may be realized as software stored for example on a flash memory.

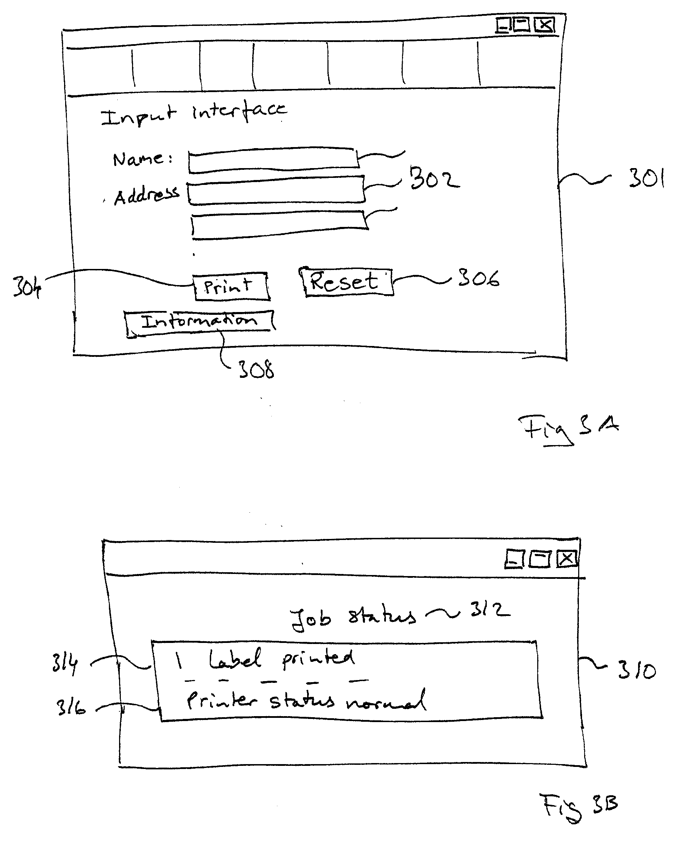

Fig 3A shows an example of an HTML-page 301 arranged as an input interface with input fields 302 for printing information, for example such information that is to be printed out on a label printer. In the example of Fig 3A, the input fields 302 have headings "Name", "Address" etc. to guide the user. Furthermore, the HTML-page 301 is also provided with command fields or command buttons 304,306 for transmission of control commands such as print command or reset command by means of cursor functionality, e.g. mouse clicking. There may also be fields for inputting commands or control data in a text format, or program code in any predetermined format for execution in the printer. The feature of program code transmission is particularly useful in connection with program updates or specific applications of the printer. The printer itself is correspondingly adapted to interpret the input printing information, commands, control data or program code in accordance with predetermined rules, preferably based on the location or field in the input interface.

Fig 3B shows a dynamic HTML-page 310 that has been generated in response to a print out command. In the shown example there is an indication of information type, here printing "job status" 312, status information of the type printing result 314 "1 label printed" and printer status 316 "printer status normal".

The usage of the invention follows in one embodiment the steps:
- A user searches by means of a web browser an input interface HTTP-page for inputting printing information at a URL-address in the web server of the printer or in another server connected to the network, preferably the Internet.
- The user enters printing information into input fields and possibly also enters a destination address which can be a specific printer or a specific HTTP-page in a printer. The destination address can be indicated as different selections, can be completely dynamic or can be predetermined.
- The user activates a send command for sending the printing information to the printer, for example by clicking on a command field adapted for sending by means of a standard cursor function.
- The printing information is transmitted by means of HTTP to the web server of the printer via the data communications network, preferably the internet.
- The web server of the printer receives the printing information and starts the execution of the control program in the printer for printing out the printing information.
- The printer prints out the printing information on an information carrier, e.g. a label.
- The printer control program presents on a dynamically generated HTML-page an indication of the printing result, for example the number of printed labels, and functional status of the printer, possibly together with a new input interface.
- The dynamically generated HTML-page is transmitted to the web browser of the user.

In a further developed embodiment that is useful in connection with a database search where database information is retrieved by means of a database web site, the input interface is adapted for input of the search result, which thus can be transmitted directly to the printer without any particular software or application program. In one variety of the invention, an input field in the input interface is itself adapted for database searching in a database connected to the network.

The invention may be realized in different manners and is preferably a combination of specifically adapted hardware and software with the functional units or means for performing the steps indicated in the enclosed claims. A computer program product in accordance with the invention comprises program code means adapted for controlling a data processing unit of the printer to perform the steps of the inventive method.

It is readily understood that the invention may be realized in different manners within the scope of the enclosed claims.

## Claims

1. A printer for printing information on an information carrier, comprising:
- a communications interface adapted for communicating with a data communications network;
- a server functionality adapted to generate a visual input interface having an input field for inputting information to be transmitted to the printer from a user application program.

2. The printer as recited in claim 1, wherein said information to be transmitted is printing information.

3. The printer as recited in claim 1, wherein said information to be transmitted is control information.

4. The printer as recited in claim 1, wherein said information to be transmitted is program code to be executed in a data processing unit of said printer.

5. The printer as recited in claim 1, wherein said input interface is provided with a command field for transmitting a control command to said printer.

6. The printer as recited in claim 1, further comprising means for communicating by means of a packet switching data communications protocol, preferably based on the HTTP.

7. The printer as recited in claim 1, further being adapted to generate an HTML-page comprising said input interface and being devised for transmitting said information to the printer.

8. The printer as recited in claim 1, further being adapted to generate a dynamic HTML-page for transmitting information to a web browser connected to said data communications network.

9. The printer as recited in claim 1, further comprising a web server for communicating information based on the HTTP, said web server being adapted to manage a static HTML-page with information fields for presenting printer information.

10. The printer as recited in claim 1, further being adapted to generate a dynamic HTML-page for transmitting printer status information from the printer to a web browser in response to control data being transmitted to the printer.

11. The printer as recited in claim 1 ,wherein the input interface is devised to transmit database information resulting from a database search via a database server that preferably is separate from the printer server.

12. A method of controlling a printer adapted for printing information on an information carrier, comprising the steps of:
- communicating with a user application program via a data communications network;
- generating a visual input interface having an input field for inputting information to be transmitted to the printer from said user application program.

13. The method as recited in claim 13, further comprising the step of interpreting said information as printing information.

14. The method as recited in claim 13, further comprising the step of interpreting said information as control information.

15. The method as recited in claim 13, further comprising the step of interpreting said information as program code to be executed in a data processing unit of said printer.

16. The method as recited in claim 13, further comprising the step of generating on said input interface a command field for transmitting a control command from said user application program to said printer.

17. The method as recited in claim 13, further comprising the step of communicating by means of a packet switching data communications protocol, preferably based on the HTTP.

18. The method as recited in claim 13, further comprising the step of generating an HTML-page comprising said input interface and being devised for transmitting said information to the printer.

19. The method as recited in claim 13, further comprising the step of generating a dynamic HTML-page for transmitting information from the printer to a web browser connected to said data communications network.

20. The method as recited in claim 13, further comprising the step of managing a static HTML-page having information fields for presenting printer information and thereby communicating said printer information to a user application program based on the HTTP.

21. The method as recited in claim 13, further comprising the step of generating a dynamic HTML-page for transmitting printer status information to a web browser in response to control data being transmitted to the printer from a user application program.

22. The method as recited in claim 13, further comprising the step of, through the input interface, transmitting database information resulting from a database search via a database server that preferably is separate from the printer server.

23. The method as recited in claim 13, further comprising the step of:
- generating a first HTML-page at a URL-address, the HTML-page containing printer information;
- generating a second HTML-page at a URL-address, the HTML-page containing an input interface for inputting printing information to be print out on said printer and for inputting control data to said printer; and
- controlling the printer in response to said control data.

24. A computer program product for a printer adapted to printing information on an information carrier, the printer comprising a data processing unit and a data storage for storing program code for controlling said data processing unit, comprising:
- program code for controlling the data processing unit to communicate with a user application program via a data communications network;
- program code for controlling the data processing unit to generate a visual input interface having an input field for inputting information to be transmitted to the printer from said user application program.

25. The computer program product method as recited in claim 24, further comprising program code for controlling the data processing unit to interpret said information as printing information.

26. The computer program product method as recited in claim 24, further comprising program code for controlling the data processing unit to interpret said information as control information.

27. The computer program product method as recited in claim 24, further comprising program code for controlling the data processing unit to interpret said information as program code to be executed in a data processing unit of said printer.

28. The computer program product method as recited in claim 24, further comprising program code for controlling the data processing unit to generate on said input interface a command field for transmitting a control command from said user application program to said printer.

29. The computer program product method as recited in claim 24, further comprising program code for controlling the data processing unit to communicate by means of a packet switching data communications protocol, preferably based on the HTTP.

30. The computer program product method as recited in claim 24, further comprising program code for controlling the data processing unit to generate an HTML-page comprising said input interface and being devised for transmitting said information to the printer.

31. The computer program product method as recited in claim 24, further comprising program code for controlling the data processing unit to generate a dynamic HTML-page for transmitting information from the printer to a web browser connected to said data communications network.

32. The computer program product method as recited in claim 24, further comprising program code for controlling the data processing unit to manage a static HTML-page having information fields for presenting printer information and thereby communicating said printer information to a user application program based on the HTTP.

33. The computer program product method as recited in claim 24, further comprising program code for controlling the data processing unit to generate a dynamic HTML-page for transmitting printer status information to a web browser in response to control data being transmitted to the printer from a user application program.

34. The computer program product method as recited in claim 24, further comprising program code for controlling the data processing unit to, through the input interface, transmit database information resulting from a database search via a database server that preferably is separate from the printer server.

35. The computer program product method as recited in claim 24, further comprising program code for controlling the data processing unit to:
- generate a first HTML-page at a URL-address, the HTML-page containing printer information;
- generate a second HTML-page at a URL-address, the HTML-page containing an input interface for inputting printing information to be print out on said printer and for inputting control data to said printer; and
- control the printer in response to said control data.
